# EUROPEAN PATENT APPLICATION

(11) **EP 4 151 604 A1**
(43) Date of publication of application: **22.03.2023**
(21) Application number: 20945895.9
(22) Date of filing: 08.12.2020
(51) Int. Cl.: C02F 1/44, B01D 37/04, B01D 61/12

(54) **FILTERING TIME CONTROL METHOD, AND WATER PURIFIER AND APPARATUSES**

(30) Priority: 20.07.2020 CN 202010700110
(71) Applicant: Guangdong Midea White Home Appliance Technology Innovation Center Co., Ltd., Foshan, Guangdong 528311 (CN); Midea Group Co., Ltd., Foshan, Guangdong 528311 (CN)
(72) Inventor: YANG, Lv, Foshan, Guangdong 528311 (CN); LUO, Chen, Foshan, Guangdong 528311 (CN); ZENG, Zhenjie, Foshan, Guangdong 528311 (CN)
(74) Representative: Whitlock, Holly Elizabeth Ann
(86) International application number: PCT/CN2020/134688
(87) International publication number: WO 2022/016777

(57) **Abstract**

A filtering time control method, a water purifier (100), a filtering time control apparatus, and an apparatus having a storage function. The filtering time control method comprises: by testing a water quality status value, determining whether this instance of filtering meets requirements; and according to the result indicating whether this instance of filtering meets requirements, setting the next filtering time on the basis of this filtering time. Therefore, adaptive adjustment of a filtering time is realized, such that the filtering effect is not only ensured, but water resources are also saved on.

## Description

### TECHNICAL FIELD

The present disclosure relates to the field of filtration, and in particular to a method of controlling filtration time, a water purifier, and a device.

### BACKGROUND

In the art, a filtration time length of a device configured with filtration, such as a water purifier, may not be determined. If the filtration time length is excessively long, water may be wasted, and a service life of a filter cartridge may be shortened. If the filtration time length is excessively short, a filtering effect may be not guaranteed and, in serious cases, health of the user may be affected.

Therefore, in order to solve the above technical problem, a new method of controlling the filtration time length, a water purifier, and a device shall be provided.

### SUMMARY OF THE DISCLOSURE

The present disclosure provides a method of controlling the filtration time length, including: determining whether a current filtration meets requirements by detecting a water quality status value; and setting a filtration time length of a next filtration based on a filtration time length of the current filtration and depending on a result of determining whether the current filtration meets requirements.

In some embodiments, determining whether a current filtration meets requirements by detecting a water quality status value, includes: detecting a first water quality status value before the current filtration, and a second water quality status value after the current filtration; calculating a ratio of the second water quality status value to the first water quality status value; and determining the current filtration as meeting the requirements in response to the ratio being less than or equal to a ratio threshold; and determining the current filtration as not meeting the requirements in response to the ratio being greater than the ratio threshold.

In some embodiments, determining whether a current filtration meets requirements by detecting a water quality status value, includes: continuously detecting a third water quality status value while the current filtration is being performed; calculating a water quality change of the third water quality status value; and determining whether the current filtration meets the requirements based on the water quality change.

In some embodiments, determining whether a current filtration meets requirements by detecting a water quality status value, includes: continuously and periodically detecting the third water quality status value while the current filtration is being performed by taking a unit time length as a period; calculating a status changing rate of the third water quality status value within the unit time length; and determining the current filtration as meeting the requirements in response to the status changing rate being less than a changing rate threshold; and determining the current filtration as not meeting the requirements in response to the status changing rate being greater than or equal to the changing rate threshold.

In some embodiments, determining whether a current filtration meets requirements by detecting a water quality status value, includes: detecting a fourth water quality status value before the current filtration and a fifth water quality status value after the current filtration; calculating to obtain a calculated fifth water quality status value after the current filtration based on the fourth water quality status value and a preset water quality changing ratio; and determining whether the current filtration meets the requirements based on a result of comparing the fifth water quality status value and the calculated fifth water quality status value.

In some embodiments, setting a filtration time length of a next filtration based on a filtration time length of the current filtration and depending on a result of determining whether the current filtration meets requirements, includes: setting the filtration time length of the next filtration to be the filtration time length of the current filtration in response to the current filtration meeting the requirements; and setting the filtration time length of the next filtration to be the filtration time length of the current filtration adding a unit time length in response to the current filtration not meeting the requirements.

In some embodiments, the water quality status value is an ion concentration value.

The present disclosure further provides a water purifier, including: a filtration device; a detection device, connected to the filtration device and configured to obtain a water quality status value; and a control device, connected to the detection device and the filtration device, and configured to determine whether a current filtration meets requirements based on the water quality status value and to set a filtration time length of a next filtration based on a filtration time length of the current filtration and depending on a result of determining whether the current filtration meets requirements.

In some embodiments, the filtration device comprises a water pump, a first reverse osmosis filter cartridge, and a second reverse osmosis filter cartridge, a raw water end of the first reverse osmosis filter cartridge is connected to the water pump, a pure water end of the first reverse osmosis filter cartridge is connected to a pure water port, a waste water end of the first reverse osmosis filter cartridge is connected to a waste water port; a raw water end of the second reverse osmosis filter cartridge is connected to the water pump, a pure water end of the second reverse osmosis filter cartridge is connected to the pure water port, a waste water end of the second reverse osmosis filter cartridge is connected to the waste water port; the detection device comprises a first sensor and a second sensor, the first sensor is disposed in front of a water inlet of the pump, the second sensor is connected between the pure water port and the pure water ends of the first reverse osmosis filter cartridge and the second reverse osmosis filter cartridge; and/or the detection device comprises a third sensor and a fourth sensor, the third sensor is connected between the waste water end of the first reverse osmosis filter cartridge and the waste water port; and the fourth sensor is connected between the waste water end of the second reverse osmosis filter cartridge and the waste water port.

The present disclosure further provides a device having a storage function, storing program data, wherein the program data is capable of being executed to implement the method of controlling the filtration time length as described in the above.

Compared to the related art, technical effects of the present disclosure include the following:

The present disclosure provides a method of controlling filtration time length. A water quality status value may be detected to determine whether a current filtration meets requirements. Further, a time length of a next filtration may be set based on a result of determining whether the current filtration meets the requirements. In this way, the filtration time length may be adjusted adaptively, the filtration effect may be ensured, and the water may be saved.

### BRIEF DESCRIPTION OF THE DRAWINGS

In order to illustrate the technical solutions of the embodiments of the present disclosure more clearly, the accompanying drawings for the embodiments are briefly described below. Obviously, the following drawings show only some of the embodiments of the present disclosure, and other drawings may be obtained by any ordinary skilled person in the art based on these drawings without any creative work.
FIG. 1 is a flow chart of a method of controlling a filtration time length according to an embodiment of the present disclosure.
FIG. 2 is a flow chart of an operation S11 shown in FIG. 1, according to an embodiment of the present disclosure.
FIG. 3 is a flow chart of an operation S11 shown in FIG. 1, according to another embodiment of the present disclosure.
FIG. 4 is a flow chart of an operation S11 shown in FIG. 1, according to still another embodiment of the present disclosure.
FIG. 5 is a structural schematic view of a water purifier according to an embodiment of the present disclosure.
FIG. 6 is a structural schematic view of a water purifier according to another embodiment of the present disclosure.
FIG. 7 is a structural schematic view of a water purifier according to still another embodiment of the present disclosure.
FIG. 8 is block diagram of a device of controlling a filtration time length according to an embodiment of the present disclosure.
FIG. 9 is a structural schematic view of a device having a storage function according to an embodiment of the present disclosure.

Water purifier 100, water pump 10, first reverse osmosis filter cartridge 21, second reverse osmosis filter cartridge 23, first sensor 31, second sensor 33, third sensor 35, fourth sensor 37, pure water port 40, waste water port 50.

### DETAILED DESCRIPTION

The technical solutions of the embodiments of the present disclosure are described in detail below by referring to the accompanying drawings.

In the following description, specific details, such as particular system structures, interfaces, techniques and the like, are presented for the purpose of illustration but not for limiting the present disclosure, such that the present disclosure may be understood more thoroughly.

Terms "system" and "network" are often used interchangeably throughout the present disclosure. The term "and/or" in the present disclosure simply describes a relationship between associated objects and indicates that three relationships may exist. For example, A and/or B can indicate: A alone, both A and B, and B alone. In addition, the character "/" in the present disclosure generally indicates an "or" relationship between the former and the lateral associated objects. In addition, the word "a plurality of" in the present disclosure may indicate two or more than two.

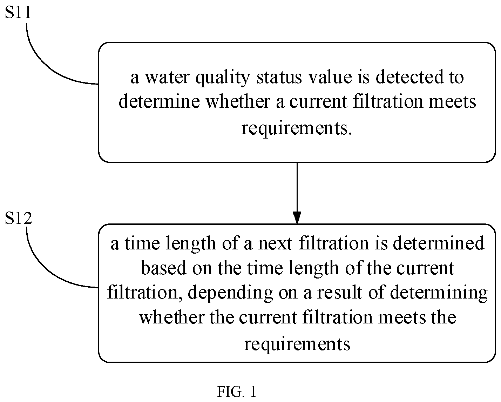

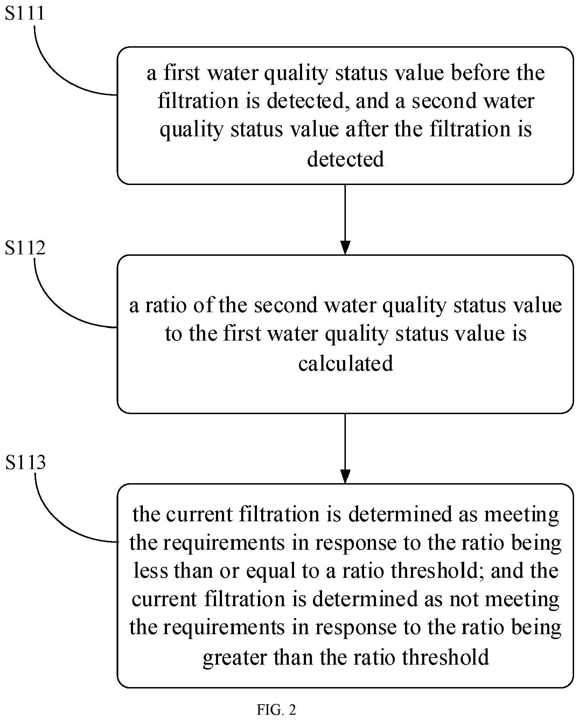

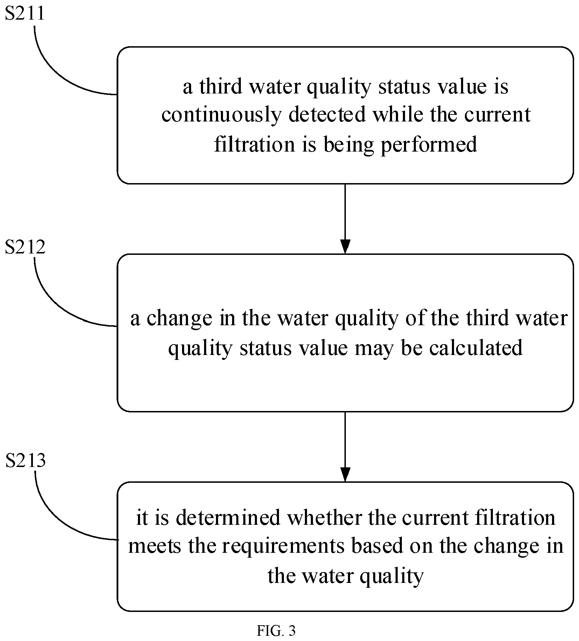

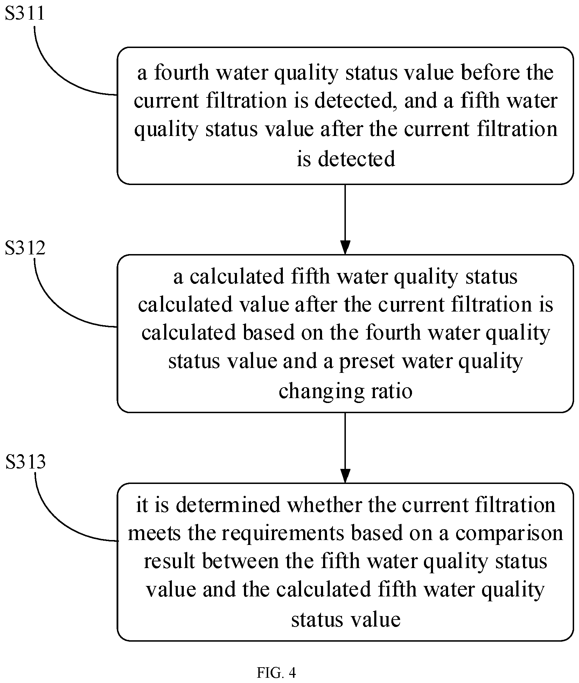

As shown in FIGs. 1 to 4, the present disclosure provides a method of controlling a filtration time length, which includes the following operations.

In an operation S11, a water quality status value is detected to determine whether a current filtration meets requirements.

In an embodiment, the operation S11 includes the following operations. In an operation S 111, in the present filtration, a first water quality status value before the filtration is detected, and a second water quality status value after the filtration is detected. In an operation S 112, a ratio of the second water quality status value to the first water quality status value is calculated. In an operation S113, the current filtration is determined as meeting the requirements in response to the ratio being less than or equal to a ratio threshold; and the current filtration is determined as not meeting the requirements in response to the ratio being greater than the ratio threshold.

In detail, a sensor may be arranged to detect the water quality status value. For example, in an application scenario, the above method of controlling the filtration time length may be applied to a water purifier 100. The water quality status value may be an ion concentration value. The first water quality status value is an ion concentration value of raw water. The second water quality status value is an ion concentration value of purified water. When the ratio is less than or equal to the ratio threshold, the pure water filtered by the water purifier 100 may be determined as reaching a standard, i.e., the current filtration meeting the requirements. When the ratio is greater than the ratio threshold, the pure water filtered by the water purifier 100 has not reached the standard, i.e., the current filtration does not meet the requirements.

To be noted that, the ratio threshold may be determined corresponding to a property of a filtration device, i.e., various filtration devices may take various ratio thresholds, which will not be limited herein.

In another embodiment, the operation S11 further includes the following operations. In an operation S211, a third water quality status value is continuously detected while the current filtration is being performed. In an operation S212, a change in the water quality of the third water quality status value may be calculated. In an operation S213, it is determined whether the current filtration meets the requirements based on the change in the water quality.

In detail, in an embodiment, firstly, taking a unit time length as a period, the third water quality status value in the current filtration is continuously and periodically detected. A status changing rate of the third water quality status value within the unit time length is calculated. When the status changing rate is less than a changing rate threshold, the current filtration is determined as meeting the requirements. When the status changing rate is greater than or equal to the changing rate threshold, the current filtration is determined as not meeting the requirements.

In still another embodiment, the operation S11 may include the following operations.

In an operation S311, a fourth water quality status value before the current filtration is detected, and a fifth water quality status value after the current filtration is detected. In an operation S312, a calculated fifth water quality status calculated value after the current filtration is calculated based on the fourth water quality status value and a preset water quality changing ratio. In an operation S313, it is determined whether the current filtration meets the requirements based on a comparison result between the fifth water quality status value and the calculated fifth water quality status value.

In an operation S12, a time length of a next filtration is determined based on the time length of the current filtration, depending on a result of determining whether the current filtration meets the requirements.

Specifically, in an embodiment, the time length of the next filtration is determined as the time length of the current filtration in response to the current filtration meeting the requirements. The time length of the next filtration is determined as the time length of the current filtration adding a unit time length in response to the current filtration not meeting the requirements.

Accordingly, the present disclosure provides the method of controlling the filtration time length. The water quality status value is detected to determine whether the current filtration meets the requirements. Further, the time length of the next filtration is set based on the result of determining whether the current filtration meets the requirements. In this way, the filtration time length may be adjusted adaptively, the filtration effect is ensured, and the water is saved.

To be noted, the above method of controlling the filtration time length is applicable to a device having a filtration function, such as the water purifier 100, and so on. The above method of controlling the filtration time length will be described in detail below by taking the water purifier 100 as an example.

The present disclosure provides the water purifier 100, including a filtration device, a detection device and a control device. The detection device is connected to the filtration device to be configured to obtain the water quality status value. The control device is connected to the detection device and the filtration device to be configured to determine whether the current filtration meets the requirements based on the water quality status value, and further configured to set the time length of the next filtration based on the time length of the current filtration, depending on the result of determining whether the current filtration meets the requirements.

In detail, the filtration device includes a water pump 10, a first reverse osmosis filter cartridge 21, and a second reverse osmosis filter cartridge 23. A raw water end of the first reverse osmosis filter cartridge 21 is connected to the water pump 10. A pure water end of the first reverse osmosis filter cartridge 21 is connected to a pure water port 40. A waste water end of the first reverse osmosis filter cartridge 21 is connected to a waste water port 50. A raw water end of the second reverse osmosis filter cartridge 23 is connected to the water pump 10. A pure water end of the second reverse osmosis filter cartridge 23 is connected to the pure water port 40. A waste water end of the second reverse osmosis filter cartridge 23 is connected to the waste water port 50.

In some embodiments, the water pump 10 may be a booster pump and may be a pump having a variable power. In this way, a power of the pump 10 may be adjusted while the pump 10 is supplying water to one reverse osmosis filter cartridge or a plurality of reverse osmosis filter cartridges, such that system stability may be ensured.

To be noted that, in the present embodiment, the first reverse osmosis filter cartridge 21 and the second reverse osmosis filter cartridge 23 may be connected to one pure water port 40 or connected respective pure water ports 40. The first reverse osmosis filter cartridge 21 and the second reverse osmosis filter cartridge 23 may be connected to one waste water port 50 or connected respective waste water ports 50. The present disclosure will not limit the connected pure water port 40 and the connected waste water port 50.

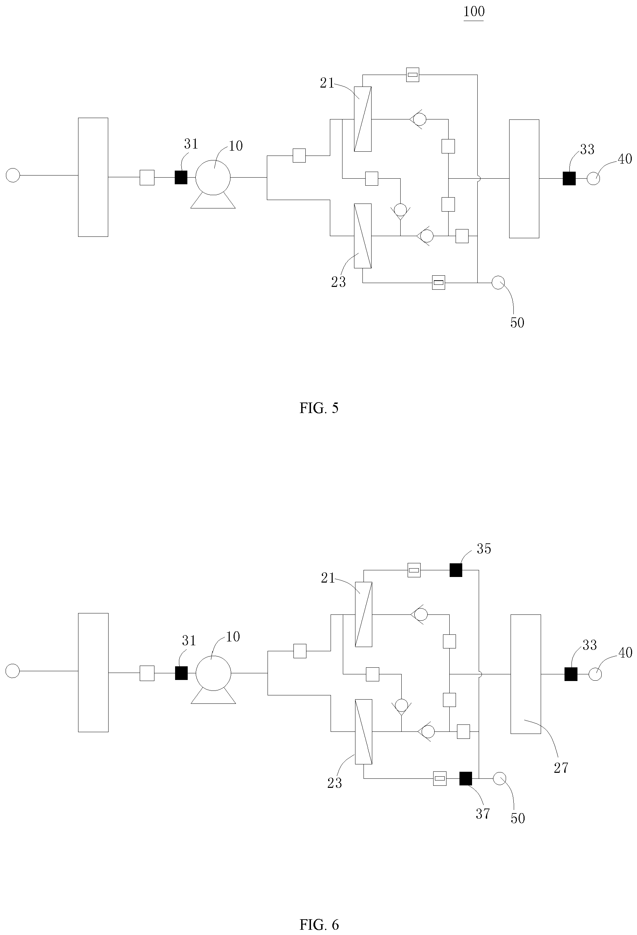

In an embodiment, as shown in FIG. 5, in order to detect the water quality status, the detection device includes a first sensor 31 and a second sensor 33. The first sensor 31 is connected to and disposed in front of a water inlet of the pump 10, and is configured to detect the ion concentration value. The second sensor 33 is connected between the pure water port 40 and pure water ends of the first reverse osmosis filter cartridge 21 and the second reverse osmosis filter cartridge 23, and is configured to detect the ion concentration value. Specifically, the first sensor 31 is configured to detect the ion concentration value in the raw water, and the second sensor 33 is configured to detect the ion concentration value in the pure water. In this way, a time length and a cycle that the water purifier 100 flushes the first reverse osmosis filter cartridge 21 and the second reverse osmosis filter cartridge 23 may be adjusted based on the ratio between the ion concentration value of the raw water and the ion concentration value of the pure water.

In the above method of controlling the filtration time length, the first water quality status value is the ion concentration value detected by the first sensor 31, the second water quality status value is the ion concentration value detected by the second sensor 33. In a specific embodiment, the water quality status value may be a hardness value, a pH value, and so on.

When the ratio of the ion concentration value in the raw water to the ion concentration value in the pure water is small, the filtration effects of the first reverse osmosis filter cartridge 21 and the second reverse osmosis filter cartridge 23 may be relatively poor. In this case, a time length that the first reverse osmosis filter cartridge 21 and the second reverse osmosis filter cartridge 23 are flushed may be extended to reduce the ion concentration value in the pure water. When the ratio of the ion concentration value in the raw water to the ion concentration value in the pure water is large, the filtration effects of the first reverse osmosis filter cartridge 21 and the second reverse osmosis filter cartridge 23 may be better. In this case, the time length that the first reverse osmosis filter cartridge 21 and the second reverse osmosis filter cartridge 23 are flushed may be reduced appropriately, or a cycle that the first reverse osmosis filter cartridge 21 and the second reverse osmosis filter cartridge 23 are flushed may be increased appropriately to save water and save energy consumption.

For example, the filtration time length is x, the first sensor 31 obtains the first water quality status value j before the filtration, the second sensor 33 obtains the second water quality status value k after the filtration. The water purifier 100 compares the j to the k. In response to k/j < 0.1, it is determined that the filtration time length x meets the flushing effect, and the filtration time length x is unchanged. On the contrary, in response to k/j > 0.1, it is determined that the filtration time length x is does not meet the flushing effect, and the unit time length n is added to the filtration time length x. In the next filtration, the filtration time length may be x+n. In this way, the filtration time length is updated by performing the detection continuously and cyclically.

To be noted that in the above embodiment, the ratio threshold is 0.1. Of course, in other embodiments, the ratio threshold may be determined as other values based on actual usage, which will not be limited here.

In a second embodiment, as shown in FIG. 6, being different from the first embodiment, a third sensor 35 and a fourth sensor 37 are further arranged. The third sensor 35 is connected between the waste water end of the first reverse osmosis filter cartridge 21 and the waste water port 50. The fourth sensor 37 is connected between the waste water end of the second reverse osmosis filter cartridge 23 and the waste water port 50. Specifically, the third sensor 35 is configured to detect the ion concentration value of waste water discharged out of the first reverse osmosis filter cartridge 21. The fourth sensor 37 is configured to detect the ion concentration value of waste water discharged out of the second reverse osmosis filter cartridge 23.

It is determined whether the filtering effect of the first reverse osmosis filter cartridge 2 meets the requirements based on a ratio of the water quality status value detected by the third sensor 35 to the water quality status value detected by the second sensor 33. It is determined whether the filtering effect of the second reverse osmosis filter cartridge 23 meets the requirements based on the water quality status value detected by the fourth sensor 37 and the water quality status value detected by the first sensor 31. That is, in the present embodiment, the filtering effect is determined by detecting a change between the water quality status of the waste water after the filtration and the water quality status of the pure water after the filtration, or by detecting a change between the water quality status of the waste water after the filtration and the water quality status of the pure water after the filtration.

For example, when the ratio of the water quality status value detected by the third sensor 35 to the ratio of the water quality status value detected by the second sensor 33 is less than or equal to 1.1, the filtering effect of the first reverse osmosis filter cartridge 21 is determined as meeting the requirements, and the filtration time length of the current filtration is unchanged. On the contrary, when the ratio of the water quality status value detected by the third sensor 35 to the ratio of the water quality status value detected by the second sensor 33 is greater than 1.1, the filtering effect of the first reverse osmosis filter cartridge 21 is determined as not meeting the requirements, the unit filtration time n is added to the current filtration time length. Similarly, when a ratio of a seventh water quality status value to an eighth water quality status value is less than 1.1, the filtering effect of the second reverse osmosis filter cartridge 23 is determined as not meeting the requirements, and the unit filtration time n is added to the current filtration time length.

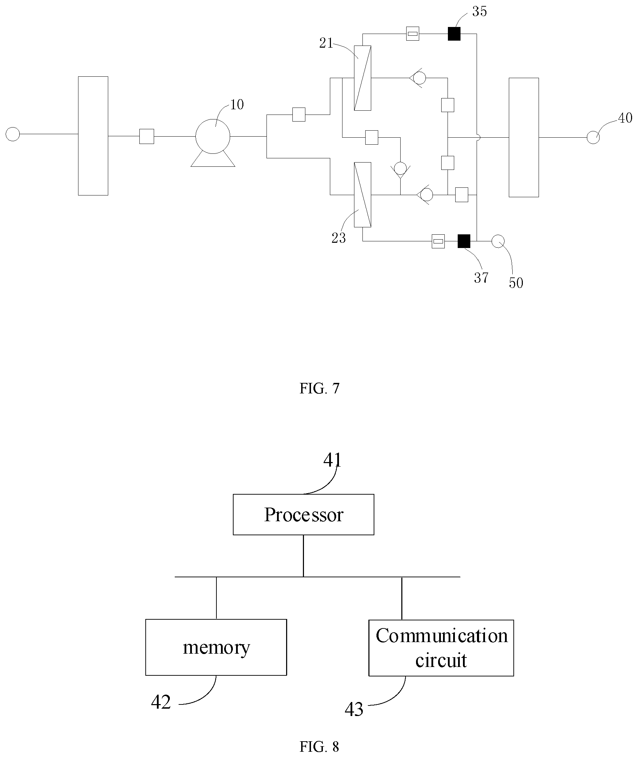

In a third embodiment, as shown in FIG. 7, being different from the second embodiment, the first sensor 31 and the second sensor 33 may be omitted, and only the third sensor 35 and the fourth sensor 37 are arranged. The third sensor 35 obtains the ion concentration value of the waste water discharged out of the first reverse osmosis filter cartridge 21 within the unit time length, and calculates a status changing rate of the ion concentration value per unit time length. When the status changing rate is less than a changing rate threshold, the current filtering effect of the first reverse osmosis filter cartridge 21 is determined as meeting the requirements. When the status changing rate is greater than the changing rate threshold, the current filtering effect of the first reverse osmosis filter cartridge 21 is determined as not meeting the requirements. Similarly, the fourth sensor 37 obtains the ion concentration value of the waste water discharged out of the second reverse osmosis filter cartridge 23 within the unit time length, and calculates a status changing rate of the ion concentration value per unit time length. When the status changing rate is less than a changing rate threshold, the current filtering effect of the second reverse osmosis filter cartridge 23 is determined as meeting the requirements. When the status changing rate is greater than the changing rate threshold, the current filtering effect of the second reverse osmosis filter cartridge 23 is determined as not meeting the requirements.

For example, in the present embodiment, it is detected whether a change of the water quality status value detected by the third sensor 35 within a time length t is less than 10%. When the change of the water quality status value detected by the third sensor 35 within a time length t is less than 10%, the filtering effect of the first reverse osmosis filter cartridge 21 is determined as meeting the requirements. When the change of the water quality status value detected by the third sensor 35 within a time length t is greater than 10%, the filtering effect of the first reverse osmosis filter cartridge 21 is determined as not meeting the requirements. Similarly, it is detected whether a change of the water quality status value detected by the fourth sensor 37 within a time length t is less than 10%. When the change of the water quality status value detected by the fourth sensor 37 within a time length t is less than 10%, the filtering effect of the second reverse osmosis filter cartridge 23 is determined as meeting the requirements. When the change of the water quality status value detected by the fourth sensor 37 within a time length t is greater than 10%, the filtering effect of the second reverse osmosis filter cartridge 23 is determined as not meeting the requirements.

As shown in FIG. 8, the present disclosure further provides a device of controlling the filtration time length including a processor 41, a memory 42, and a communication circuit 43. The processor 41 is coupled to the memory 42 and the communication circuit 43 respectively. The processor 41, the memory 42, and the communication circuit 43, when operating, may implement the method of controlling the filtration time length of any of the above embodiments.

In detail, the processor 41 is configured to control itself and the memory 42 to implement the operations in any of the above flushing method embodiments. The processor 41 may be referred to as a central processing unit (CPU). The processor 41 may be an integrated circuit chip having a signal processing capability. The processor 41 may also be a general purpose processor, a digital signal processor (DSP), an application specific integrated circuit (ASIC), a field-programmable gate array (FPGA) or other programmable logic devices, a discrete gate or a transistor logic device, a discrete hardware component. The general purpose processor may be a microprocessor or any conventional processor, and so on. In addition, the processor 41 may be achieved by a plurality of integrated circuit chips

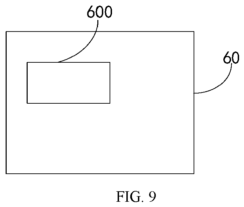

In addition, as shown in FIG. 9, the present disclosure further provides an apparatus having a storage function. The storage apparatus 60 stores program instructions 600 that can be run by a processor. The program instructions 600 may be configured to implement the temperature measurement method in any of the above embodiments. That is, when the above temperature measurement method is implemented in a software form and sold or used as a stand-alone product, the temperature measurement method may be stored in a readable storage apparatus 60 of an electronic device. The storage apparatus 60 may be for example a USB disc, an optical disc, a server, and so on.

In the several embodiments provided in the present disclosure, it shall be understood that the disclosed method and device may be implemented in other ways. For example, the embodiments of the device described above are merely schematic. For example, division of modules or units is performed based on a logical function, and in practical, the division may be achieved in another manner. For example, multiple units or assemblies may be combined or integrated into another system, or some features may be omitted. On another hand, mutual coupling or direct coupling or communicative connection shown or discussed may be indirect coupling or communicative connection between devices or units via some interfaces, and may be electrical connection, mechanical connection, and so on.

Units illustrated as separate components may be or may not be physically separated. A component shown as a unit may be or may not be a physical unit. That is, the component may be located at one place or may be distributed to a plurality of network units. Some or all of these units may be selected based on practical needs to achieve the purpose of the present disclosure.

In addition, various functional units in the various embodiments of the present disclosure may be integrated in one processing unit, or each of the various functional units may be physically separately arranged, or two or more units may be integrated in one unit. The above integrated unit may be implemented either in a form of hardware or in a form of software functional units.

The integrated unit may be stored in a computer readable storage medium when being implemented as the software functional unit and sold or used as a stand-alone product. It is understood that the essence of the technical solution of the present disclosure or a part or all of the technical solution which contributes to the prior art, may be embodied in the form of a computer software product and is stored in a storage medium. The computer software product includes a plurality of instructions to enable a computer device (which may be a personal computer, a server, or a network device, and so on) or a processor to perform all or some of the operations of the method of each embodiment of the present disclosure. The aforementioned storage medium may include a USB disc, a portable hard drive, a read-only memory (ROM), a random access memory (RAM), a magnetic disc, an optical disc, and other media that can store program codes.

The above description shows only embodiments of the present disclosure and shall not be interpreted as limiting the scope of the present disclosure. Any equivalent structure or equivalent process transformation performed based on the contents and accompanying drawings of the present disclosure, directly or indirectly applied in other related technical fields, shall be equally covered by the scope of the present disclosure.

## Claims

1. A method of controlling the filtration time length, comprising:
determining whether a current filtration meets requirements by detecting a water quality status value; and
setting a filtration time length of a next filtration based on a filtration time length of the current filtration and depending on a result of determining whether the current filtration meets requirements.

2. The method according to claim 1, wherein determining whether a current filtration meets requirements by detecting a water quality status value, comprises:
detecting a first water quality status value before the current filtration, and a second water quality status value after the current filtration;
calculating a ratio of the second water quality status value to the first water quality status value; and
determining the current filtration as meeting the requirements in response to the ratio being less than or equal to a ratio threshold; and determining the current filtration as not meeting the requirements in response to the ratio being greater than the ratio threshold.

3. The method according to claim 1, wherein determining whether a current filtration meets requirements by detecting a water quality status value, comprises:
continuously detecting a third water quality status value while the current filtration is being performed;
calculating a water quality change of the third water quality status value; and
determining whether the current filtration meets the requirements based on the water quality change.

4. The method according to claim 3, wherein determining whether a current filtration meets requirements by detecting a water quality status value, comprises:
continuously and periodically detecting the third water quality status value while the current filtration is being performed by taking a unit time length as a period;
calculating a status changing rate of the third water quality status value within the unit time length; and
determining the current filtration as meeting the requirements in response to the status changing rate being less than a changing rate threshold; and determining the current filtration as not meeting the requirements in response to the status changing rate being greater than or equal to the changing rate threshold.

5. The method according to claim 1, wherein determining whether a current filtration meets requirements by detecting a water quality status value, comprises:
detecting a fourth water quality status value before the current filtration and a fifth water quality status value after the current filtration;
calculating to obtain a calculated fifth water quality status value after the current filtration based on the fourth water quality status value and a preset water quality changing ratio; and
determining whether the current filtration meets the requirements based on a result of comparing the fifth water quality status value and the calculated fifth water quality status value.

6. The method according to claim 1, wherein setting a filtration time length of a next filtration based on a filtration time length of the current filtration and depending on a result of determining whether the current filtration meets requirements, comprises:
setting the filtration time length of the next filtration to be the filtration time length of the current filtration in response to the current filtration meeting the requirements; and
setting the filtration time length of the next filtration to be the filtration time length of the current filtration adding a unit time length in response to the current filtration not meeting the requirements.

7. The method according to any one of claims 1 to 6, wherein the water quality status value is an ion concentration value.

8. A water purifier, comprising:
a filtration device;
a detection device, connected to the filtration device and configured to obtain a water quality status value; and
a control device, connected to the detection device and the filtration device, and configured to determine whether a current filtration meets requirements based on the water quality status value and to set a filtration time length of a next filtration based on a filtration time length of the current filtration and depending on a result of determining whether the current filtration meets requirements.

9. The water purifier according to claim 8, wherein the filtration device comprises a water pump, a first reverse osmosis filter cartridge, and a second reverse osmosis filter cartridge, a raw water end of the first reverse osmosis filter cartridge is connected to the water pump, a pure water end of the first reverse osmosis filter cartridge is connected to a pure water port, a waste water end of the first reverse osmosis filter cartridge is connected to a waste water port; a raw water end of the second reverse osmosis filter cartridge is connected to the water pump, a pure water end of the second reverse osmosis filter cartridge is connected to the pure water port, a waste water end of the second reverse osmosis filter cartridge is connected to the waste water port;
the detection device comprises a first sensor and a second sensor, the first sensor is disposed in front of a water inlet of the pump, the second sensor is connected between the pure water port and the pure water ends of the first reverse osmosis filter cartridge and the second reverse osmosis filter cartridge; and/or
the detection device comprises a third sensor and a fourth sensor, the third sensor is connected between the waste water end of the first reverse osmosis filter cartridge and the waste water port; and the fourth sensor is connected between the waste water end of the second reverse osmosis filter cartridge and the waste water port.

10. A device having a storage function, storing program data, wherein the program data is capable of being executed to implement the method of controlling the filtration time length as claimed in any one of claims 1 to 7.
